# EUROPÄISCHE PATENTSCHRIFT

(11) **EP 2 936 654 B1**
(45) Veröffentlichungstag und Bekanntmachung des Hinweises auf die Patenterteilung: **25.07.2018**
(21) Anmeldenummer: 13802668.7
(22) Anmeldetag: 11.12.2013
(51) Int. Cl.: H02K 1/16, H02K 1/18, H02K 1/14, H02K 3/38, H02K 3/52

(54) **STATOR FÜR EINE ELEKTRISCHE MASCHINE**
STATOR FOR AN ELECTRIC MACHINE
STATOR POUR MOTEUR ÉLECTRIQUE

(30) Priorität: 21.12.2012 DE 102012224153
(43) Veröffentlichungstag der Anmeldung: 28.10.2015
(73) Patentinhaber: Robert Bosch GmbH, 70442 Stuttgart (DE)
(72) Erfinder: AUMANN, Christian, 70199 Stuttgart (DE)
(86) Internationale Anmeldenummer: PCT/EP2013/076286
(87) Internationale Veröffentlichungsnummer: WO 2014/095535

(56) Entgegenhaltungen:
- EP-A2- 1 278 293
- WO-A2-2011/046295
- US-A- 4 340 829
- US-A1- 2006 012 261

## Beschreibung

Die Erfindung bezieht sich auf einen Stator für eine elektrische Maschine nach dem Oberbegriff des Anspruches 1.

### Stand der Technik

Aus der Anwendung von Servolenkungen sind Statoren für elektrische Maschinen bekannt, die aus einem Lamellenpaket aufgebaut sind, welches aus einer Mehrzahl aufeinanderliegender Statorlamellen aus einem Blechmaterial gebildet ist. Das Lamellenpaket ist an beiden gegenüberliegenden Stirnseiten von jeweils einer ebenfalls aus Blech gefertigten End- bzw. Decklamelle begrenzt, an die sich eine Isolierlamelle aus elektrisch isolierendem Material anschließt. Eine der Isolierlamellen ist auf der dem Lamellenpaket abgewandten Seite mit einer Anschlussplatte verbunden, über die Spulenwicklungen, welche im Stator aufgenommen sind, an die Stromversorgung angeschlossen werden.

Bei der Montage des Stators wird zunächst das Lamellenpaket aus den einzelnen Lamellen zusammengesetzt, anschließend erfolgt in einer Wickelmaschine die Bewicklung. Hierbei ist darauf zu achten, dass die einzelnen Bauteile des Stators ihre Relativposition zueinander beibehalten.

Mit der US 2006/0012261 A1 ist ein Stator einer elektrischen Maschine bekannt geworden, bei dem einzelne Polelemente über radiale Stege mit einem inneren Ring verbunden sind. Dabei sind an den radialen Stegen axiale Löcher ausgebildet, in die Positionierungsstifte einer Isolierlamelle eingreifen.

Die WO 2011/046295 A2 zeigt einen Statorring, an dessen Jochbereich durchgängige axiale runde Löcher ausgeformt sind. Dabei greift ein Positionierstift einer Isolierlamelle vollständig durch das Durchgangsloch hindurch.

Bei einem Stator gemäß der US 4,340,829 ist eine axiale Ausnehmung in das Blechpaket ausgeformt, in die ein entsprechender axialer Fortsatz einer Isolierlamelle eingreift. Der axiale Fortsatz ist hülsenförmig ausgebildet, so dass ein Verbindungsbolzen durch die Hülse und das Loch des Statorpakets vollständig axial hindurchgreift.

### Offenbarung der Erfindung

Der Erfindung liegt die Aufgabe zugrunde, mit einfachen konstruktiven Maßnahmen einen Stator für eine elektrische Maschine montagefreundlich auszubilden.

Diese Aufgabe wird erfindungsgemäß mit den Merkmalen des Anspruches 1 gelöst. Die Unteransprüche geben zweckmäßige Weiterbildungen an.

Der erfindungsgemäße Stator wird in elektrischen Maschinen eingesetzt, beispielsweise in Antriebsmotoren, welche in Kraftfahrzeugen Verwendung finden oder in handgeführten Werkzeugmaschinen. Bei der elektrischen Maschine handelt es sich beispielsweise um einen Innenläufermotor mit außen liegendem, umgreifenden Stator und innen liegendem Rotor.

Der Stator weist ein Lamellenpaket auf, welches aus einer Mehrzahl aufeinanderliegender, einzelner Statorlamellen besteht, die beispielsweise aus einem Blechmaterial gefertigt sind, insbesondere aus einem Blech ausgestanzt sind. Die stirnseitigen Lamellen des Lamellenpakets bilden die End- bzw. Decklamellen, wobei sich an mindestens eine Decklamelle eine Isolierlamelle aus elektrisch isolierendem Material anschließt. Bei dem erfindungsgemäßen Stator ist die Isolierlamelle zumindest mit der Decklamelle, welche unmittelbar benachbart ist, formschlüssig verbunden. Diese Ausführung hat den Vorteil, dass eine Vorfixierung und Positionierung der Einzelteile des Lamellenpakets gegeben ist, so dass nach dem Aufeinanderschichten der Statorlamellen zu dem Lamellenpaket und dem Aufbringen der Isolierlamelle eine vorgefertigte Baueinheit entsteht, welche der Wickelmaschine zugeführt werden kann, wobei die Gefahr signifikant reduziert ist, dass die Einzelteile des Lamellenpakets sich wieder voneinander lösen. In der Wickelmaschine kann die Bewicklung durchgeführt werden, also das Aufbringen von Statorwicklungen auf Statorzähne, die an dem Lamellenpaket gebildet sind. Der Formschluss zwischen der Isolierlamelle und der benachbarten Decklamelle lässt sich beim Herstellen des Lamellenpakets einfach erzeugen.

Der Formschluss wird über ein Formschlusselement, beispielsweise einen Fixierbolzen hergestellt, der in eine zugeordnete Ausnehmung einragt. Der Fixierbolzen ist vorteilhafterweise an der Isolierlamelle angeordnet, die Ausnehmung in die Decklamelle eingebracht. Der Fixierbolzen kann gegebenenfalls einteilig mit der Isolierlamelle ausgebildet sein, insbesondere in einer Ausführung der Isolierlamelle als Kunststoffbauteil, vorzugsweise als Kunststoff-Spritzgussbauteil. Des Weiteren ist es zweckmäßig, über den Umfang verteilt mehrere Fixierbolzen vorzusehen, die in zugeordnete Ausnehmungen in der Decklamelle einragen. Die Verbindung über den Fixierbolzen und die Ausnehmung erfolgt in Umfangsrichtung und in Radialrichtung in formschlüssiger Weise, gegebenenfalls auch in Achsrichtung. Der Fixierbolzen kann mit Druck in die Ausnehmung eingefügt werden, wodurch ein Reibschluss zwischen der Wandung des Fixierbolzens und den die Ausnehmung begrenzenden Wandabschnitten entsteht. Bei einer Verformung des Fixierbolzens - insbesondere in der Ausführung der Isolierlamelle einschließlich Fixierbolzen aus Kunststoff - kann auch in Achsrichtung durch einen Hinterschnitt zwischen dem Fixierbolzen und der Ausnehmung ein Formschluss hergestellt werden.

Die Ausnehmung in der Decklamelle wird vorteilhafterweise durch Stanzen erzeugt. Des Weiteren ist es zweckmäßig, dass die Ausnehmung mit Abstand zur Umfangsseite der Decklamelle angeordnet ist, so dass die Ausnehmung vollständig von Material der Decklamelle umschlossen ist. Auf diese Weise wird in alle Richtungen orthogonal zur Längsachse eine formschlüssige Verbindung zwischen der Isolierlamelle und der Decklamelle erreicht.

Bei der erfindungsgemäßen Ausführung ragt der Fixierbolzen nicht nur in die Decklamelle, sondern in eine Ausnehmung in mindestens einer weiteren Statorlamelle ein, welche auf die Decklamelle folgt. Dabei sind mehrere auf die Decklamelle unmittelbar folgende Statorlamellen mit Ausnehmungen versehen, die mit der Ausnehmung in der Decklamelle fluchten und in die der Fixierbolzen einragt. Die Ausnehmungen in den weiteren Statorlamellen sind zur Umfangsseite hin offen ausgebildet und werden vorteilhafterweise ebenso wie die Ausnehmung der Decklamelle durch Stanzen eingebracht. Des Weiteren ist es zweckmäßig, dass die Ausnehmung in der Statorlamelle als ein Langloch mit einer Längserstreckung in Umfangsrichtung ausgebildet ist. Im Falle von geschrägten Statoren, welche bezogen auf die Statorlängsachse schräg verlaufende Spulenwicklungen aufweisen, wird über die Ausführung der Ausnehmung als Langloch der Winkelverschiebung zwischen der Decklamelle und der bzw. den nachfolgenden Statorlamellen Rechnung getragen. Die Ausführung als Langloch erlaubt ein axiales Einführen des Fixierbolzens trotz des Winkelversatzes zwischen den aufeinanderfolgenden Lamellen. Die Ausnehmung in der Decklamelle entspricht dagegen vorteilhafterweise dem Querschnitt des Fixierbolzens.

Gemäß einer weiteren zweckmäßigen Ausführung ist die Isolierlamelle auf der dem Lamellenpaket abgewandten Seite formschlüssig mit einer Verschaltscheibe (Anschlussplatte) verbunden, über die die Spulenwicklungen im Stator mit Strom versorgt wird. Die Isolierlamelle ist somit im Bereich einer Stirnseite formschlüssig mit der zugewandten Decklamelle des Lamellenpakets und im Bereich der gegenüberliegenden, der Decklamelle abgewandten Stirnseite formschlüssig mit der zugewandten Verschaltscheibe verbunden.

Die Verbindung zur Verschaltscheibe erfolgt über ein weiteres Formschlusselement, welches gegebenenfalls mit dem Fixierbolzen zusammenfällt. Beispielsweise kann der Fixierbolzen einen ersten und einen zweiten Bolzenabschnitt aufweisen, die die Isolierlamelle an gegenüberliegenden Stirnseiten überragen, wobei der erste Bolzenabschnitt in die Ausnehmung in der Decklamelle und der zweite Bolzenabschnitt in eine Ausnehmung einragt, welche in die Verschaltscheibe eingebracht ist. Dem Fixierbolzen kommt somit eine doppelte Funktion zu, nämlich zum einen die formschlüssige Verbindung zur Decklamelle und zum andern die formschlüssige Verbindung mit der Verschaltscheibe.

Die Ausnehmung in der Verschaltscheibe, in die der Bolzenabschnitt einragt, kann radial nach innen offen ausgebildet sein. Somit besteht ein Formschluss radial nach außen sowie in Umfangsrichtung.

Zur Verbesserung der Verbindung zwischen dem Fixierbolzen und der Ausnehmung können an der Mantelfläche des Fixierbolzens Klemmrippen angeordnet sein, die mit Pressung in die Ausnehmung axial eingeführt werden. Derartige Pressrippen können sowohl am ersten als auch am zweiten Bolzenabschnitt des Fixierbolzens angeordnet sein.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Stators mit einem Lamellenpaket und einer stirnseitig aufgesetzten Verschaltscheibe,
- Fig. 2: das Lamellenpaket des Stators in perspektivischer Ansicht,
- Fig. 3: ein Ausschnitt aus einer Isolierlamelle, die zwischen dem Lamellenpaket und der Verschaltscheibe angeordnet ist, mit einem Fixierbolzen,
- Fig. 4: das Lamellenpaket mit an beiden Stirnseiten angeordneten Isolierlamellen, dargestellt in Seitenansicht,
- Fig. 5: das Lamellenpaket mit Isolierlamellen in perspektivischer Ansicht,
- Fig. 6: eine Einzeldarstellung eines Fixierbolzens, der in Ausnehmungen in der Decklamelle bzw. den darauf folgenden Statorlamellen einragt,
- Fig. 7: eine Schnittdarstellung des Fixierbolzens, der in die Ausnehmung in der Decklamelle bzw. den darauf folgenden Statorlamellen einragt,
- Fig. 8: einen Schnitt quer zur Längsachse des Fixierbolzens,
- Fig. 9: die Verschaltscheibe in perspektivischer Einzeldarstellung,
- Fig. 10: eine perspektivische Ansicht von Isolierlamelle und Verschaltscheibe,
- Fig. 11: in Draufsicht die Verbindung zwischen einem Bolzenabschnitt des Fixierbolzens an der Isolierlamelle und der Verschaltscheibe,
- Fig. 12: die Verbindung zwischen Fixierbolzen und Verschaltscheibe im Schnitt quer zur Bolzenlängsachse,
- Fig. 13: die Verbindung zwischen Fixierbolzen und Verschaltscheibe im Längsschnitt durch den Fixierbolzen.

In den Figuren sind gleiche Bauteile mit gleichen Bezugszeichen versehen.

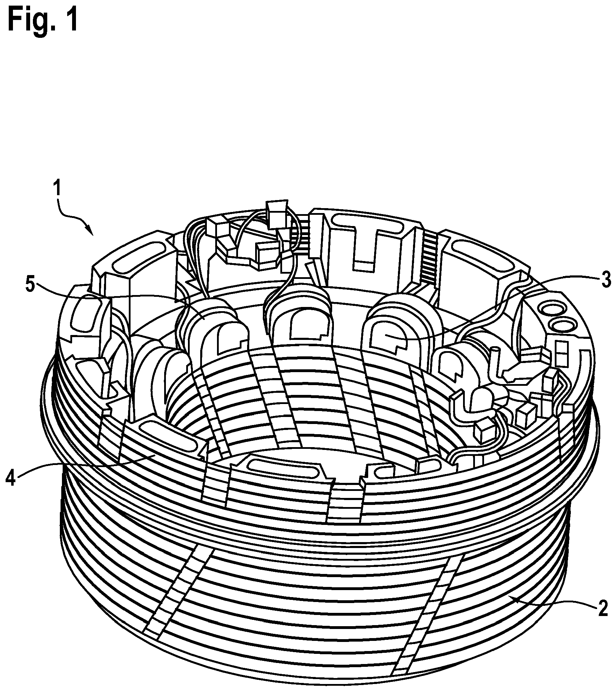

In Fig. 1 ist ein Stator 1 für eine elektrische Maschine dargestellt, insbesondere für einen elektrischen Innenläufermotor. Der Stator 1 weist ein Stator- bzw. Lamellenpaket 2 auf, das aus einer Vielzahl einzelner Statorlamellen aufgebaut ist, welche aufeinandergestapelt sind. Des Weiteren ist eine Verschaltscheibe 4 an der Stirnseite des Lamellenpakets 2 angeordnet, über die Wicklungen 5 im Lamellenpaket 2 mit Strom versorgt werden. Zwischen dem Lamellenpaket 2 und der Verschaltscheibe 4 ist eine Isolierlamelle 3 angeordnet, welche aus einem elektrisch isolierenden Material besteht, insbesondere aus Kunststoff. Die Isolierlamelle 3 kann als Kunststoff-Spritzgussbauteil ausgeführt sein. Eine entsprechende Isolierlamelle befindet sich außerdem an der gegenüberliegenden axialen Stirnseite des Lamellenpaketes 2.

Das Lamellenpaket 2 ist geschrägt ausgeführt und weist radial nach innen gerichtete Trägerzähne auf, um die die Wicklungen 5 gelegt sind. Aufgrund der Schrägung verlaufen die Wicklungen 5 unter einem Winkel zur StatorLängsachse.

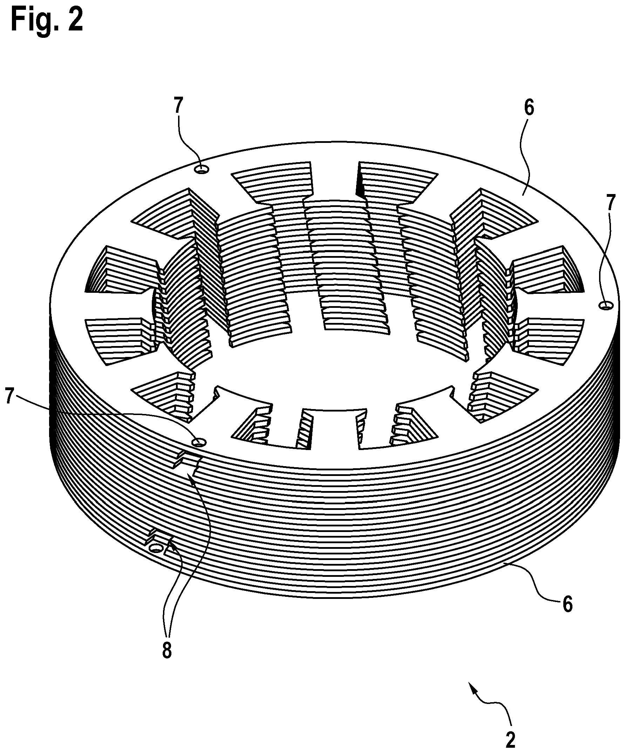

In Fig. 2 ist das Lamellenpaket 2 in perspektivischer Einzeldarstellung gezeigt. Das Lamellenpaket besteht aus einer Vielzahl aufeinandergeschichteter Statorlamellen, wobei die stirnseitigen Abschlusslamellen die End- bzw. Decklamellen 6 bilden. Jede Lamelle des Lamellenpaketes ist aus einem Blech ausgestanzt und weist einen außen liegenden Trägerring auf, an dem sich einteilig ausgebildete Trägerzähne zur Aufnahme der Wicklungen radial nach innen erstrecken.

In die Decklamellen 6 sind über den Umfang gleichmäßig verteilt insgesamt drei Ausnehmungen 7 eingebracht, die einen runden Querschnitt aufweisen und mit Abstand zur Umfangsseite angeordnet sind. Die Ausnehmungen 7 befinden sich vollständig innerhalb der Decklamellen 6. Mit den Ausnehmungen 7 korrespondieren weitere Ausnehmungen bzw. Aussparungen 8 in den unmittelbar benachbarten Statorlamellen; die Aussparungen 8 sind zur Umfangsseite hin offen ausgebildet und liegen in einer axialen Flucht mit den Ausnehmungen 7 in den stirnseitigen Decklamellen 6. Die Aussparungen 8 weisen - in der Ebene der Lamellen gesehen - eine Langlochform mit einer Längserstreckung in Umfangsrichtung auf. Dies ermöglicht es, trotz des Winkelversatzes zwischen den verschiedenen Statorlamellen eine axial durchgehende Öffnung zwischen der Decklamelle 6 und den unmittelbar benachbarten Statorlamellen zu bilden. Diese axiale Öffnung dient zur Aufnahme eines Formschlusselementes, das an der Isolierlamelle angeordnet ist.

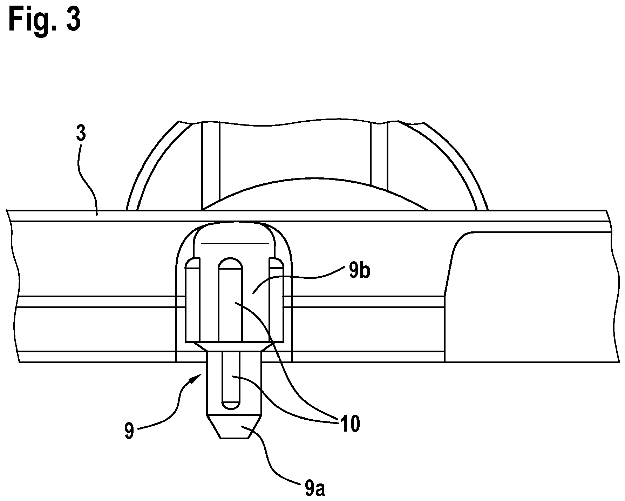

Ein derartiges Formschlusselement ist in Fig. 3 dargestellt, in der eine Isolierlamelle 3 ausschnittsweise gezeigt ist. Das Formschlusselement wird von einem Fixierbolzen 9 gebildet, der einteilig mit der Isolierlamelle 3 ausgebildet ist und einen unteren Bolzenabschnitt 9a und einen oberen Bolzenabschnitt 9b aufweist, wobei der untere Bolzenabschnitt 9a die untere Stirnseite der Isolierlamelle 3 überragt. Der obere Bolzenabschnitt 9b kann gegebenenfalls die obere Stirnseite der Isolierlamelle 3 überragen oder zumindest über die unmittelbar umgebenden Abschnitte der Isolierlamelle nach oben überstehen. Dies ermöglicht es, den unteren Bolzenabschnitt 9a in die Ausnehmungen bzw. Aussparungen 7, 8 in der Decklamelle 6 bzw. den angrenzenden Statorlamellen einzuführen und den oberen Bolzenabschnitt 9b in zugeordnete Ausnehmungen in der Verschaltscheibe 4 einzuführen. Auf diese Weise kann eine formschlüssige Verbindung zum einen zwischen der Isolierlamelle 3 und dem Lamellenpaket 2 und zum andern zwischen der Isolierlamelle 3 und der Verschaltscheibe 4 hergestellt werden.

An der Mantelfläche des Fixierbolzens 9 sind Klemmrippen 10 angeordnet, welche sich in Achsrichtung des Fixierbolzens erstrecken. Es sind sowohl am unteren Bolzenabschnitt 9a als auch am oberen Bolzenabschnitt 9b jeweils Klemmrippen 10 angeordnet. Der untere Bolzenabschnitt 9a, welcher in die Ausnehmungen 7 und 8 in den Lamellen des Lamellenpakets eingreift, weist einen kleineren Außendurchmesser auf als der obere Bolzenabschnitt 9b, der zum Eingriff in zugeordnete Ausnehmungen in der Verschaltplatte 4 bestimmt ist.

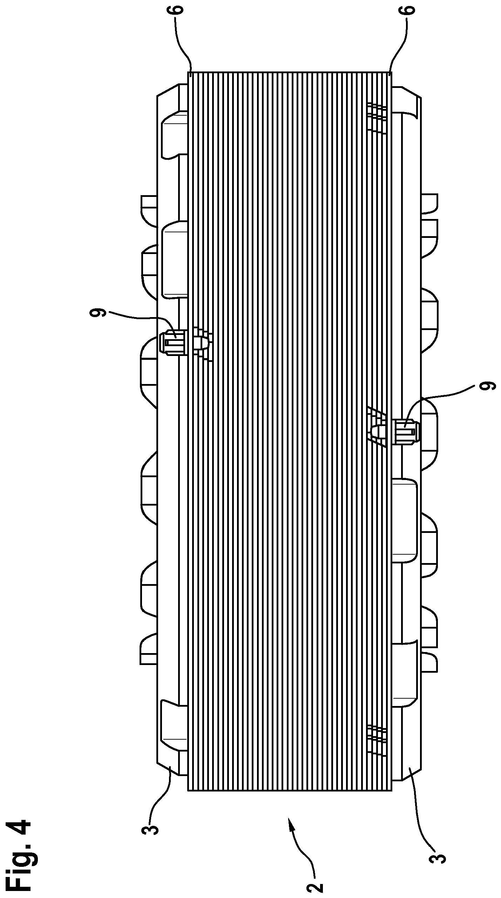

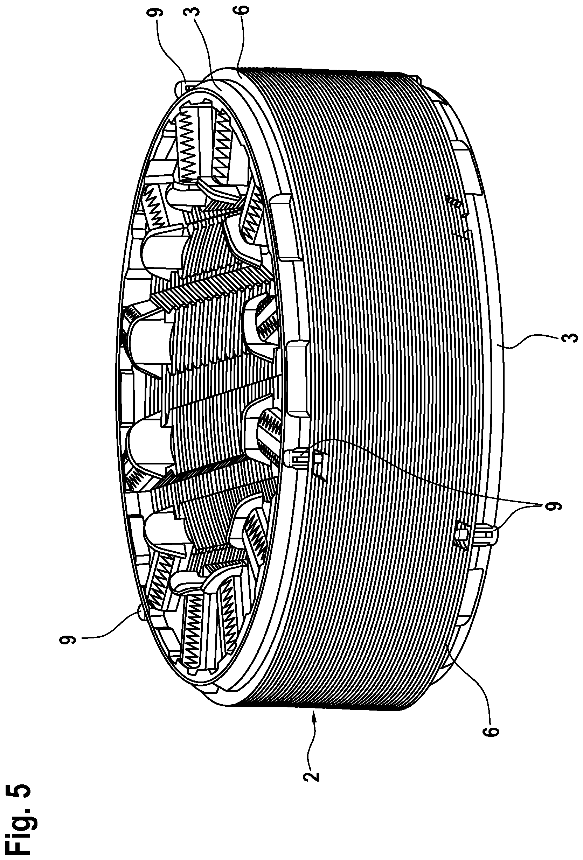

In den Fig. 4 und 5 ist das Lamellenpaket 2 mit Isolierlamellen 3 an beiden Stirnseiten dargestellt. Der perspektivischen Darstellung gemäß Fig. 5 ist zu entnehmen, dass über den Umfang verteilt insgesamt drei Fixierbolzen 9 an der Isolierlamelle 3 angeordnet sind. In die Statorlamellen einschließlich der Decklamellen 6 sind entsprechende Ausnehmungen zur Aufnahme der Fixierbolzen 9 eingebracht.

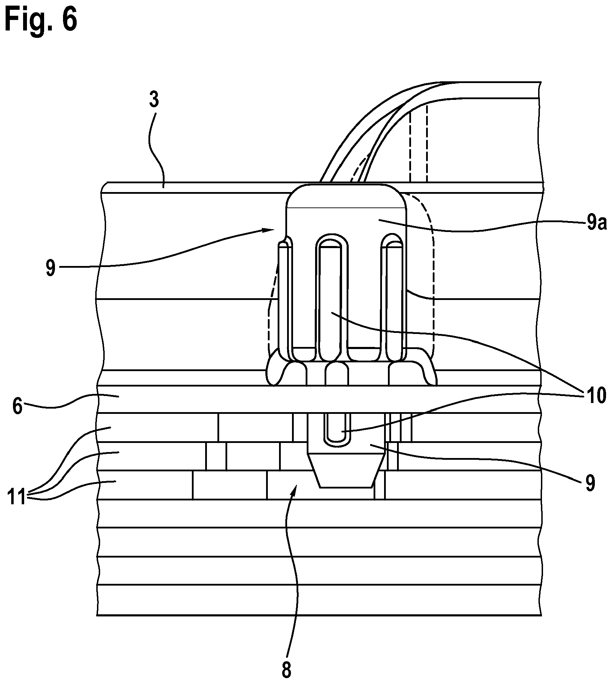

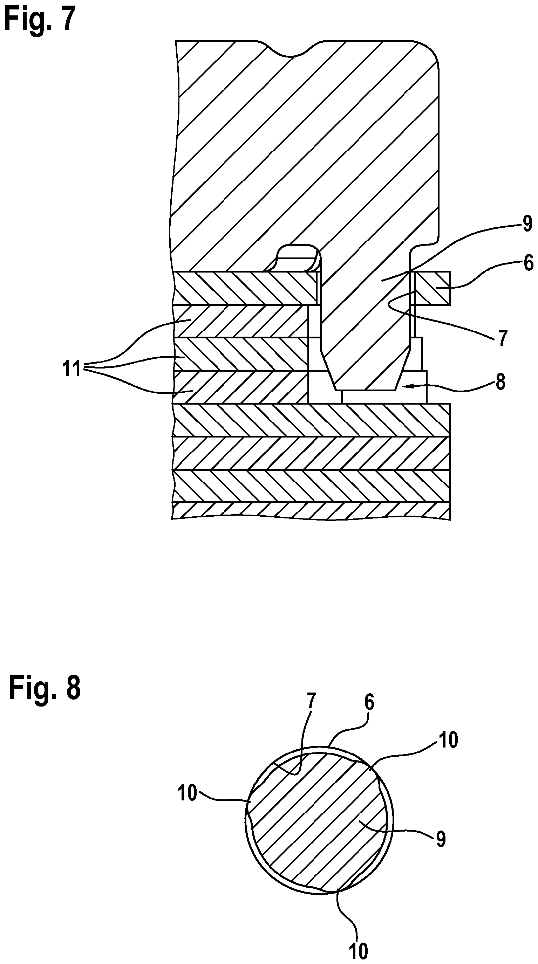

In Fig. 6 und Fig. 7 ist der Eingriff des Fixierbolzens 9 in die Ausnehmung 7 in der Decklamelle 6 sowie die Ausnehmungen bzw. Aussparungen 8 in drei unmittelbar zur Decklamelle 6 benachbarten Statorlamellen 11 dargestellt. Die Aussparungen 8 in den Statorlamellen 11 sind zur Umfangsseite hin offen ausgeführt, wohingegen die Ausnehmung 7 in der Decklamelle 6 eine umlaufende, geschlossene Wandung aufweist; die Ausnehmung 7 befindet sich mit Abstand zur Umfangsseite der Decklamelle.

Der Schnittdarstellung gemäß Fig. 8 ist zu entnehmen, dass die Klemmrippen 10, welche an der Mantelfläche des Fixierbolzens 9 angeordnet sind und radial über die Mantelfläche überstehen, im eingesetzten Zustand an der die Ausnehmung 7 begrenzenden Wandung der Decklamelle 6 anliegen. Über den Umfang verteilt sind insgesamt drei Klemmrippen 10 an der Mantelfläche des Fixierbolzens 9 angeordnet, wobei die Klemmrippen sich in Richtung der Längsachse des Fixierbolzens erstrecken.

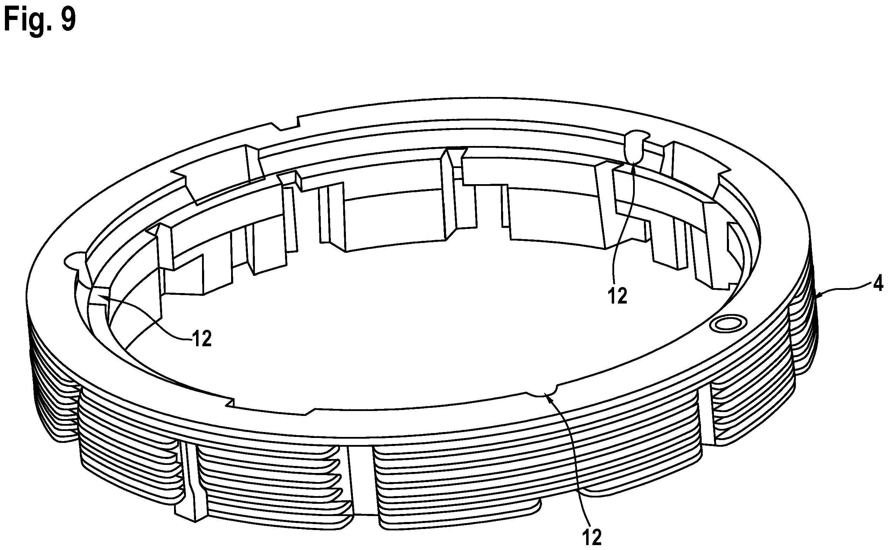

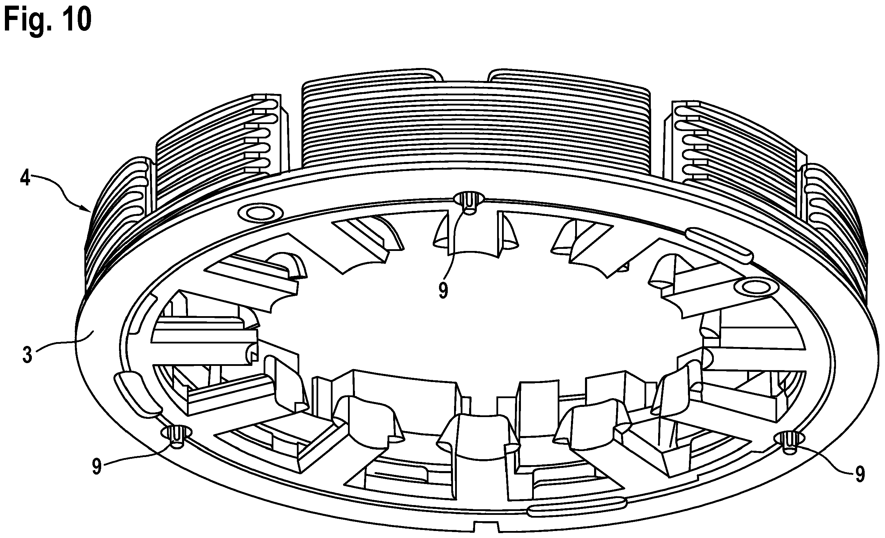

In Fig. 9 ist eine Verschaltscheibe 4 in perspektivischer Einzeldarstellung gezeigt. Zu erkennen ist, dass im Bereich einer Stirnseite über den Umfang verteilt insgesamt drei Ausnehmungen 12 in die Verschaltscheibe 4 eingebracht sind, wobei die Ausnehmungen 12 radial nach innen offen ausgebildet sind. Die Ausnehmungen 12 dienen zur Aufnahme des oberen Bolzenabschnittes 9b des Fixierbolzens 9. Die in Fig. 9 nach oben weisende Stirnseite der Verschaltscheibe 4 weist in den Darstellungen der Fig. 1 und 10 nach unten und ist der Isolierlamelle zugewandt.

In Fig. 10 sind die Isolierlamellen 3 und die Verschaltplatte 4 im verbundenen Zustand dargestellt. Der nach unten die Stirnseite überragende Abschnitt des Fixierbolzens 9 dient zum Eingriff in die zugeordneten Ausnehmungen des darunterliegenden Lamellenpakets.

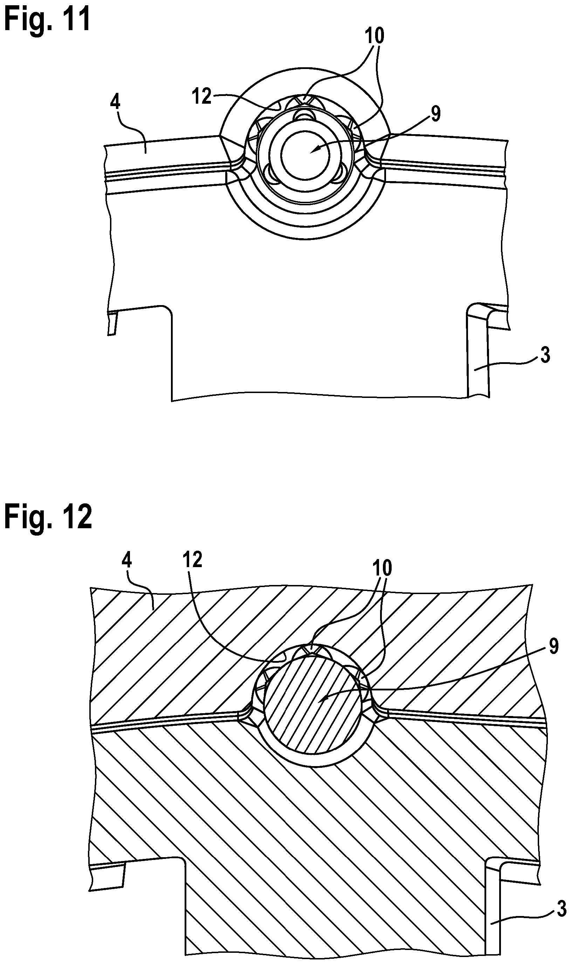

In den Detaildarstellungen der Fig. 11 und 12 ist der Eingriff des Bolzenabschnittes des Fixierbolzens 9 in die Ausnehmung 12 in der Verschaltscheibe 4 zu erkennen. Die Ausnehmung 12 ist etwa halbkreisförmig ausgebildet, die Klemmrippen 10 an dem Bolzenabschnitt des Fixierbolzens 9 erstrecken sich über ein Winkelsegment kleiner als 180° an der Mantelfläche des Fixierbolzens.

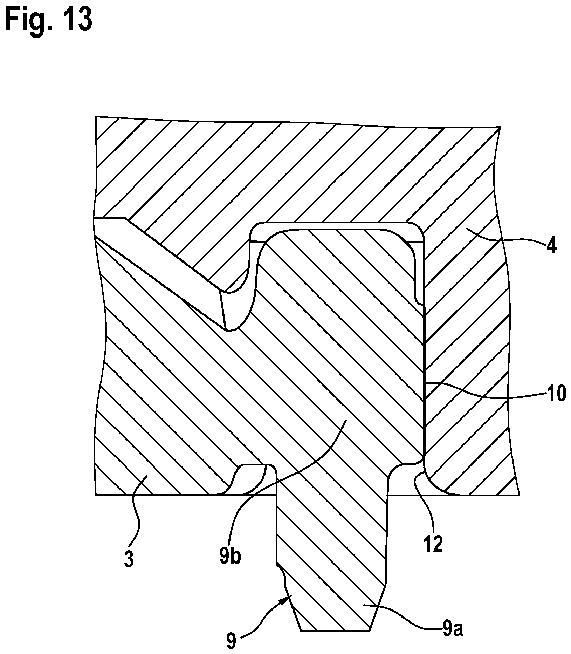

In Fig. 13 ist ein Längsschnitt durch den Fixierbolzen 9 dargestellt, der im Eingriff mit der Ausnehmung 12 in der Verschaltplatte 4 steht. Der obere Abschnitt 9b des Fixierbolzens 9 ragt in die Ausnehmung 12 in der Verschaltplatte 4 ein, wobei die an der äußeren Mantelfläche liegenden Klemmrippen 10 zusammengedrückt werden, so dass der Fixierbolzen 9 mit radialer Presskraft in der Ausnehmung 12 sitzt.

## Patentansprüche

1. Stator für eine elektrische Maschine, mit einem Lamellenpaket (2), bestehend aus einer Mehrzahl aufeinanderliegender Statorlamellen (11), wobei das Lamellenpaket (2) stirnseitig von Decklamellen (6) begrenzt ist und an mindestens einer Decklamelle (6) des Lamellenpakets (2) eine Isolierlamelle (3) angeordnet ist, **wobei** die Isolierlamelle (3) zumindest mit der Decklamelle (6), die unmittelbar benachbart ist, formschlüssig verbunden ist, **und an der Isolierlamelle (3) mindestens ein Fixierbolzen (9) angeordnet ist, der in eine zugeordnete Ausnehmung (7) in der Decklamelle (6) einragt, wobei der Fixierbolzen (9) in eine Ausnehmung (7) in mindestens einer weiteren Statorlamelle (11) einragt, die auf die Decklamelle (6) folgt, dadurch gekennzeichnet, dass die Ausnehmung (7) in der weiteren Statorlamelle (11) zur Umfangsseite offen ausgebildet ist.**

2. Stator nach Anspruch 1, **dadurch gekennzeichnet, dass jede Lamelle (6, 11) des Lamellenpaketes (2) aus einem Blech ausgestanzt ist und einen außen liegenden Trägerring aufweist, an dem sich einteilig ausgebildete Trägerzähne zur Aufnahme der Wicklungen radial nach innen erstrecken.**

3. Stator nach Anspruch 2, **dadurch gekennzeichnet, dass** der Fixierbolzen (9) einteilig mit der Isolierlamelle (3) ausgebildet ist.

4. Stator nach Anspruch 1 bis 3, **dadurch gekennzeichnet, dass** wobei die Ausnehmung (7) in der Decklamelle (6) mit Abstand zur Umfangsseite angeordnet ist.

5. Stator nach einem der Ansprüche 2 bis 4, **dadurch gekennzeichnet, dass in die Decklamellen (6) über den Umfang gleichmäßig verteilt insgesamt drei Ausnehmungen (7) eingebracht sind, die einen runden Querschnitt aufweisen.**

6. Stator nach Anspruch 5, **dadurch gekennzeichnet, dass der Eingriff des Fixierbolzens (9) in die Ausnehmung (7) in der Decklamelle (6) sowie die Ausnehmungen bzw. Aussparungen (8) in drei unmittelbar zur Decklamelle (6) benachbarten Statorlamellen (11) erfolgt.**

7. Stator nach Anspruch 5 oder 6, **dadurch gekennzeichnet, dass** die Ausnehmung (7) in der weiteren Statorlamelle (11) als Langloch mit einer Längserstreckung in Umfangsrichtung ausgebildet ist, die größer ist als die Abmessung des Fixierbolzens (9) in Umfangsrichtung, und insbesondere die Ausnehmungen (7) in Umfangsrichtung versetzt zueinander angeordnet sind.

8. Stator nach einem der Ansprüche 1 bis 7, **dadurch gekennzeichnet, dass** die Isolierlamelle (3) mit einer Verschaltscheibe (4) formschlüssig - oder insbesondere einstückig - verbunden ist, die sich stirnseitig an das Lamellenpaket (2) anschließt.

9. Stator nach Anspruch 8, **dadurch gekennzeichnet, dass** der Fixierbolzen (9) einen ersten und einen zweiten Bolzenabschnitt (9a, 9b) aufweist, die die Isolierlamelle (3) an ihren gegenüberliegenden Stirnseiten überragen, wobei der erste Bolzenabschnitt (9a) in die Ausnehmung (7) in der Decklamelle (6) und der zweite Bolzenabschnitt (9b) in eine Ausnehmung (7) in der Verschaltscheibe (4) einragt.

10. Stator nach Anspruch 9, **dadurch gekennzeichnet, dass** die Ausnehmung (7) in der Verschaltscheibe (4) radial nach innen offen ausgebildet ist.

11. Stator nach einem der Ansprüche 8 bis 10, **dadurch gekennzeichnet, dass** der erste und der zweite Bolzenabschnitt (9a, 9b) mit Klemmrippen (10) am Umfang der Bolzenabschnitte (9a, 9b) versehen sind.

12. Stator nach einem der Ansprüche 1 bis 11, **dadurch gekennzeichnet, dass** die Isolierlamelle (3) aus Kunststoff gefertigt ist.

13. Elektrische Maschine mit einem Stator (1) nach einem der Ansprüche 1 bis 12, wobei insbesondere die aufeinanderliegender Statorlamellen (11) bezüglich der Umfangsrichtung um einen bestimmten Winkel verdreht zueinander angeordnet sind, wodurch vorzugsweise Statorzähne ausgebildet werden, deren Längsachse schräg zur Drehachse des im Stator angeordneten Rotors angeordnet sind.

## Claims

1. Stator for an electric machine, comprising a laminate stack (2), consisting of a plurality of stator laminations (11) positioned one on top of the other, wherein the laminate stack (2) is delimited at the end sides by covering laminations (6) and an insulating lamination (3) is arranged on at least one covering lamination (6) of the laminate stack (2), wherein the insulating lamination (3) is connected in a form-fitting manner at least to the covering lamination (6) which is directly adjacent, and at least one fixing bolt (9), which protrudes into an assigned cutout (7) in the covering lamination (6), is arranged on the insulating lamination (3), wherein the fixing bolt (9) protrudes into a cutout (7) in at least one further stator lamination (11) which follows the covering lamination (6), **characterized in that** the cutout (7) in the further stator lamination (11) is open towards the circumferential side.

2. Stator according to Claim 1, **characterized in that** each lamination (6, 11) of the laminate stack (2) is punched out of a metal sheet and has an outer carrier ring, on which carrier teeth formed integrally for accommodating the windings extend radially inwards.

3. Stator according to Claim 2, **characterized in that** the fixing bolt (9) is formed integrally with the insulating lamination (3).

4. Stator according to Claim 1 to 3, **characterized in that** the cutout (7) is arranged in the covering lamination (6) with a spacing from the circumferential side.

5. Stator according to one of Claims 2 to 4, **characterized in that** in total three cutouts (7), distributed uniformly over the circumference, are introduced into the covering laminations (6), said cutouts having a round cross section.

6. Stator according to Claim 5, **characterized in that** the fixing bolt (4) engages in the cutout (7) in the covering lamination (6) and the cutouts or recess (8) engage in three stator laminations (11) directly adjacent to the covering lamination (6).

7. Stator according to Claim 5 or 6, **characterized in that** the cutout (7) in the further stator lamination (11) is in the form of a slot with a longitudinal extent in the circumferential direction which is greater than the dimension of the fixing bolt (9) in the circumferential direction, and in particular the cutouts (7) are arranged offset with respect to one another in the circumferential direction.

8. Stator according to one of Claims 1 to 7, **characterized in that** the insulating lamination (3) is connected in a form-fitting manner, or in particular integrally, to an interconnecting disk (4), which adjoins the laminate stack (2) at the end side.

9. Stator according to Claim 8, **characterized in that** the fixing bolt (9) has a first and a second bolt section (9a, 9b), which protrude beyond the insulating lamination (3) on its opposite end sides, wherein the first bolt section (9a) protrudes into the cutout (7) in the covering lamination (6), and the second bolt section (9b) protrudes into a cutout (7) in the interconnecting disk (4).

10. Stator according to Claim 9, **characterized in that** the cutout (7) in the interconnecting disk (4) is open radially inwards.

11. Stator according to one of Claims 8 to 10, **characterized in that** the first and second bolt sections (9a, 9b) are provided with clamping ribs (10) on the circumference of the bolt sections (9a, 9b).

12. Stator according to one of Claims 1 to 11, **characterized in that** the insulating lamination (3) is manufactured from plastic.

13. Electric machine comprising a stator (1) according to one of Claims 1 to 12, wherein in particular Stator laminations (11) positioned one on top of the other are arranged so as to be rotated through a specific angle relative to one another with respect to the circumferential direction, as a result of which preferably stator teeth are formed, whose longitudinal axis is arranged at an angle to the axis of rotation of the rotor arranged in the stator.

## Revendications

1. Stator pour une machine électrique, comprenant un paquet de lamelles (2) composé d'une pluralité de lamelles de stator (11) superposées, le paquet de lamelles (2) étant délimité du côté frontal par des lamelles de recouvrement (6) et une lamelle isolante (3) étant disposée au niveau d'au moins une lamelle de recouvrement (6) du paquet de lamelles (2), la lamelle isolante (3) étant reliée par complémentarités de formes au moins avec la lamelle de recouvrement (6) qui est directement voisine, et au moins un axe de blocage (9) étant disposé sur la lamelle isolante (3), lequel fait saillie dans une cavité (7) associée dans la lamelle de recouvrement (6), l'axe de blocage (9) faisant saillie dans une cavité (7) dans au moins une lamelle de stator (11) supplémentaire qui suit la lamelle de recouvrement (6), **caractérisé en ce que** la cavité (7) dans la lamelle de stator (11) supplémentaire est réalisée ouverte vers le côté du pourtour.

2. Stator selon la revendication 1, **caractérisé en ce que** chaque lamelle (6, 11) du paquet de lamelles (2) est estampée à partir d'une tôle et possède un anneau porteur externe au niveau duquel s'étendent, dans le sens radial vers l'intérieur, des dents porteuses réalisées d'une seule pièce destinées à accueillir les enroulements.

3. Stator selon la revendication 2, **caractérisé en ce que** l'axe de blocage (9) est réalisé d'un seul tenant avec la lamelle isolante (3).

4. Stator selon les revendications 1 à 3, **caractérisé en ce que** la cavité (7) dans la lamelle de recouvrement (6) étant disposée à l'écart du côté du pourtour.

5. Stator selon l'une des revendications 2 à 4, **caractérisé en ce qu'**un total de trois cavités (7) distribuées régulièrement sur le pourtour sont pratiquées dans les lamelles de recouvrement (6), lesquelles possèdent une section transversale ronde.

6. Stator selon la revendication 5, **caractérisé en ce que** la prise de l'axe de blocage (9) dans la cavité (7) dans la lamelle de recouvrement (6) ainsi que les cavités ou les évidements (8) s'effectue dans trois lamelles de stator (11) directement voisines de la lamelle de recouvrement (6).

7. Stator selon la revendication 5 ou 6, **caractérisé en ce que** la cavité (7) dans la lamelle de stator (11) supplémentaire est réalisée sous la forme d'un trou oblong ayant une extension longitudinale dans le sens circonférentiel qui est supérieure à la taille de l'axe de blocage (9) dans le sens circonférentiel, et notamment les cavités (7) sont disposées décalées les unes des autres dans le sens circonférentiel.

8. Stator selon l'une des revendications 1 à 7, **caractérisé en ce que** la lamelle isolante (3) est reliée par complémentarité de formes - ou notamment d'un seul tenant - à un disque de commutation (4) qui se rattache du côté frontal au paquet de lamelles (2).

9. Stator selon la revendication 8, **caractérisé en ce que** l'axe de blocage (9) possède une première et une deuxième portion d'axe (9a, 9b) qui font saillie de la lamelle isolante (3) au niveau de ses côtés frontaux opposés, la première portion d'axe (9a) faisant saillie dans la cavité (7) dans la lamelle de recouvrement (6) et la deuxième portion d'axe (9b) dans une cavité (7) dans le disque de commutation (4).

10. Stator selon la revendication 9, **caractérisé en ce que** la cavité (7) dans le disque de commutation (4) est réalisée ouverte vers l'intérieur dans le sens radial.

11. Stator selon l'une des revendications 8 à 10, **caractérisé en ce que** la première et la deuxième portion d'axe (9a, 9b) sont pourvues de nervures de serrage (10) sur le pourtour des portions d'axe (9a, 9b).

12. Stator selon l'une des revendications 1 à 11, **caractérisé en ce que** la lamelle isolante (3) est fabriquée en matière plastique.

13. Machine électrique équipée d'un stator (1) selon l'une des revendications 1 à 12, les lamelles de stator (11) superposées étant notamment disposées décalées les unes par rapport aux autres d'un angle donné en référence au sens circonférentiel, ce qui forme de préférence des dents de stator dont les axes longitudinaux sont disposés en biais par rapport à l'axe de rotation du rotor disposé dans le stator.
